(19) Europäisches Patentamt
European Patent Office
Office européen des brevets

(11) **EP 1 190 575 B1**

(12) **EUROPEAN PATENT SPECIFICATION**

(45) Date of publication and mention
of the grant of the patent:
**12.08.2009 Bulletin 2009/33**

(51) Int Cl.:
*H04N 7/173* (2006.01)     *H04N 7/50* (2006.01)

(21) Application number: **00939821.5**

(86) International application number:
**PCT/US2000/016157**

(22) Date of filing: **12.06.2000**

(87) International publication number:
**WO 2000/079797 (28.12.2000 Gazette 2000/52)**

(54) **SYSTEMS AND METHODS FOR ENHANCED VISUAL PRESENTATION USING INTERACTIVE VIDEO STREAMS**

VORRICHTUNGEN UND VERFAHREN ZUR VERBESSERTEN DARSTELLUNG MITTELS INTERAKTIVER DATENSTRÖME

SYSTEMES ET PROCEDES DE PRESENTATION VISUELLE PERFECTIONNEE A L'AIDE DE FLUX VIDEO INTERACTIFS

(84) Designated Contracting States:
**DE FR GB IT**

(30) Priority: **18.06.1999 US 336338**

(43) Date of publication of application:
**27.03.2002 Bulletin 2002/13**

(73) Proprietor: **Intel Corporation
Santa Clara, CA 95052-8119 (US)**

(72) Inventors:
• **TU, Xiaoyuan
Mountain View, CA 94043 (US)**
• **YEO, Boon-Lock
Sunnyvale, CA 94086 (US)**

(74) Representative: **Want, Clifford James et al
Harrison Goddard Foote
40- 43 Chancery Lane
London
WC2A 1JA (GB)**

(56) References cited:
EP-A- 0 720 392          WO-A-97/30551
WO-A-98/41020          US-A- 5 613 032

• SHENCHANG ERIC CHEN: "QUICKTIME VR - AN IMAGE-BASED APPROACH TO VIRTUAL ENVIRONMENT NAVIGATION" COMPUTER GRAPHICS PROCEEDINGS. LOS ANGELES, AUG. 6 - 11, 1995, COMPUTER GRAPHICS PROCEEDINGS (SIGGRAPH), NEW YORK, IEEE, US, 6 August 1995 (1995-08-06), pages 29-38, XP000546213 ISBN: 0-89791-701-4
• "Four Phographic VR technologies" INTERNET, 7 December 1998 (1998-12-07), XP002150185

**Description**

**Background of the Invention**

Technical Field of the Invention: The present invention relates to systems and methods for creation of and interaction with video signal streams which, for example, may be used for visually presenting subjects for Internet commerce.

Background Art: Internet commerce (E-Commerce) has opened up exciting new possibilities for customers to interact with businesses. Customers can now shop at their own convenience in the comfort of their own home. Furthermore, they are not restricted to visiting local businesses on-line, but can shop virtually anywhere in the world. Likewise, businesses have gained a golden opportunity of exploring new territories to a vast customer base they could only dream of before. Some well known successful E-Commerce businesses include on-line bookstores (e.g., Amazon.Com), travel agencies (e.g., Microsoft® Corporation's Expedia) and software vendors. However, other potential big players such as clothing, jewelry, furniture, and real estate businesses seem to have lagged behind. A reason for this lies in the level of difficulty in presenting these products on line using current techniques. For example, books or computer software can be adequately described by text (and perhaps a still image of the cover), but still images and text can hardly offer enough detail of a piece of jewelry or a dress or a house for a potential buyer. Most up-to-date online fashion malls offer only a single image for viewing each item. Current attempts in object/scene presentation rely on text, still image or image-based rendering (IBR) techniques such as image panorama. These techniques suffer from the lack of visual realism, lack of interactivity, offer limited visual information, and/or are restricted to only small class of objects (e.g., convex objects).

It is possible to build graphics models of products. An advantage is that graphics models may offer complete user interactivity. However, current graphics rendering and modeling algorithms are still some distance away from replicating reality. Furthermore, the cost of creating these models is relatively high and scales dramatically with the complexity of geometry, material and dynamic property as well as lighting conditions. Even creating a 3D model of a crystal vase for interactive viewing is a difficult task because of the complex interactions of light with the vase.

To provide better representation of commercial products on the Internet, some online real estate businesses (such as htip://www.apartment.com) have employed simple IBR techniques, also commonly known as QuickTime VR, which is discussed in detail in Shenchang Eric Chen: "QuickTime VR - An image-based approach to virtual environment navigation", Computer graphics proceedings, Los Angeles, August 6-11, 1995, Computer Graphic Proceedings (SIGGRAPH), New York, IEEE, US, 6 August 1995, pp 29-38. IBR techniques embed digital images in simple 3D graphics models aiming for both realism and interactivity. The basic idea is to stitch multiple images (taken while rotating the camera in 360 degrees) together to form a panorama. This panorama is then "pasted" onto an invisible cylinder for user manipulation. The user can interactively view the surrounding scene (as if standing at the center of the cylinder) by "spinning" the cylinder with the mouse in the graphics window. Interactive viewing of 360-degree surrounding is more informative and interesting than passive viewing of a still image. In addition, panoramas are easily built with only a few images. Commercial software for doing this has already been bundled with certain digital cameras. However, there are several drawbacks:

> (1) Distortion: IBR panoramas are generated by "stitching" planar images together then "pasting" them onto cylinders or spheres (less common) for interactive inspection. The closer range at which the original images were taken (corresponding to larger curvature of the cylinder or sphere), the more severe the viewing distortion. Moreover, the "stitching" algorithm relies on finding and matching "feature sets" (often regular patterns) in neighboring images. This means that the algorithm may fail or at least perform poorly with highly irregular scenes.
>
> (2) Limited tilt (up down) viewing range: current panoramas provide rather limited tilt viewing range before severe distortions occur. This restricts the amount of visual information available to the user.
>
> (3) Looking out versus looking in (at): commercial IBR panoramas only provide views corresponding to the user looking out and around (such as when standing in the middle of a room and look around). It is much harder to construct panoramic Views corresponding to the user looking in and at an object. Foward this end, researchers have been investigating more sophisticated IBR algorithms, such as light fields. These algorithms try to construct a crude or partial 3D model of the object from images taken at different viewing angles in order to create in-between views for interaction. However, current techniques have many limitations such as requiring convexity of the objects, and perform poorly with objects of complex or irregular 3D shapes (holes or severe distortions appear in certain views due to lack of, or mismatch of image data). Reflective glass is an example of a complex object. Lack of image data can be avoided by using more images densely taken around the object, however this amounts to increased complexity in the calibration algorithms (cost in content creation) and still does not solve the distortion problem.
>
> (4) Not for moving objects: IBR-based techniques are ineffective when dealing with dynamic (moving) objects. This restricts their usage from many categories of products, such as clothing (ideally we would like to see how a dress looks on a model walking the runway instead of laying flat on a table), or animated toys, pets, mechanical parts, etc.

Document US 5, 732,185 discloses a multi-scene recording disk and a data reproducing apparatus which enables a user to select and enjoy one of simultaneously proceeding scenes, and also enables a program editor to edit programs using a new concept and novel fashion.

## Summary of the Invention

Accordingly, a first aspect of embodiments of the present invention provide a method as claimed in claim 1.

A second aspect of embodiment of the invention provides machine-readable medium as claimed in claim 16.

A third aspect of embodiments of the present invention provides a system as claimed in claim 14. Other embodiments are described and claimed.

## Brief Description of the Drawings

The invention will be understood more fully from the detailed description given below and from the accompanying drawings of embodiments of the invention which, however, should not be taken to limit the invention to the specific embodiments described, but are for explanation and understanding only.

FIG. 1 is a schematic block diagram representation of a content providing system, a link, and two remote receiving computers according to some embodiments of the invention.

FIG. 2 is a schematic representation of a system for creating video streams of a subject that is rotated from different references; according to some embodiments of the invention.

FIG. 3 is a schematic representation of a system for creating video streams of a subject from different references wherein a camera may be rotated, according to some embodiments of the invention.

FIG. 4 is a schematic representation of a system for creating video streams of a subject from different references wherein cameras may be rotated, according to some embodiments of the invention.

FIG. 5 is a representation of frames in three video streams created from difference references.

FIG. 6 illustrates different frames from three different video streams and illustrates changing frames within a video stream and to another video stream, according to some embodiments of the invention.

FIG. 7 illustrates state diagrams corresponding to different video streams and transitions between them.

FIG. 8 illustrates different panoramic video streams.

FIG. 9 illustrates different panoramic video streams and tilt video streams.

FIG. 10 illustrates different panoramic video streams and tilt video streams and changing frames between them, according to some embodiments of the invention.

FIG. 11 illustrates three frames in a video stream and magnification of some portions of them, according to some embodiments of the invention.

FIG. 12 is a block and flow diagram representation of a prototype system for interactively playing video streams.

## Detailed Description

A. <u>Overview</u>

The present invention involves creation of at least one digital video stream of a subject while there is relative motion between the subject and the camera. Examples of the subject include an object(s), a place (such as a house or apartment), and a scene (such as a natural setting). The digital video streams are then available for interactive viewing. A video camera can easily produce panoramic views the same as IBR panoramas but with substantially less distortion. Moreover, there are essentially no restrictions on the kinds of views (looking out or looking at, tilt, pan, etc.) that can be provided or the complexity of the targeted scenes and objects. By contrast, IBR-based techniques work well in only limited circumstances (e.g., with convex objects).

In some embodiments, multiple video streams are created from different references (e.g., different viewpoints). A data structure based on a finite state machine is used to capture the relationships among the different video streams. Video streams from different references are treated as different states within the state machine. A user can interact with the video streams through user inputs such as mouse to get the experience of rotating the subject clockwise or anti-clockwise (or rotating the camera with respect to the subject) within a state, zooming in to the portions of the subject or switching to a different video stream (which for example, may be created from a reference at different elevation).

The invention is suitable for Internet Commerce based merchandising. Using this invention, an object can be presented with high quality and great realism. In addition, flexible interactivity is offered. In various embodiments, the invention provides the following advantages. The remote representation of the viewed video signals is visually authentic (realistic). It is easy to interact with the video signals (e.g., motion of a mouse is intuitive and convenient). The remote representation may be informative, providing sufficient details of the subject. The visual signals are relatively inexpensive to create and to access on the Internet.

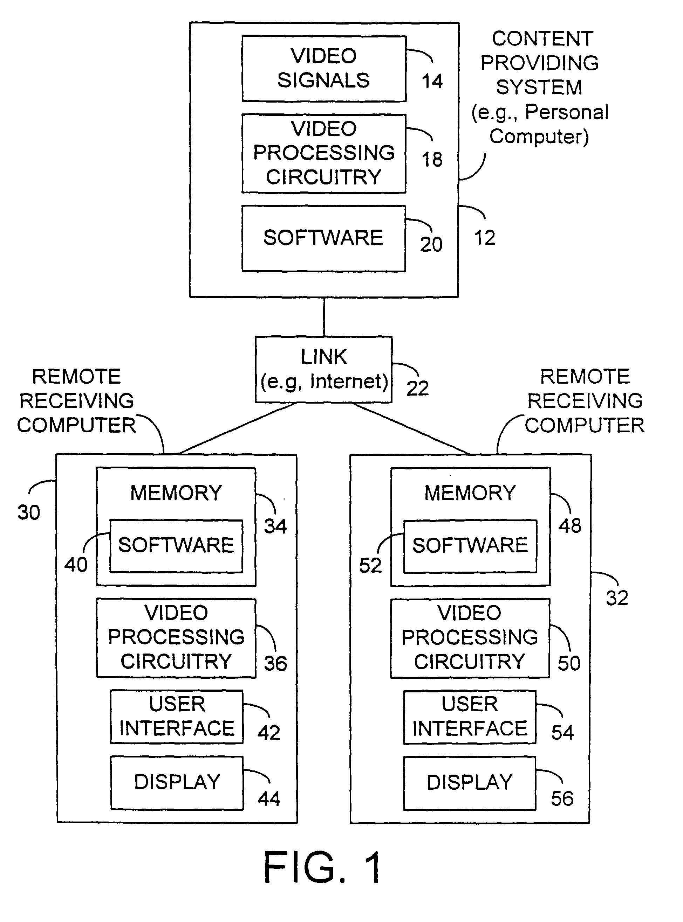

As an example, referring to FIG. 1, a content providing system 12 (e.g., a personal computer), includes video streams 14 in memory, video processing circuitry 18, and software 20. Video processing circuitry 18 may include dedicated hardware (e.g., a graphics card) and a processor. When requested by a remote receiving computer 30 or 32, content providing system 12 provides video signals from one or more of the video streams to computer 30 or 32. Computer 30 may request different signals from computer 32 and content providing system 12 may provide them different video signals in a streaming video fashion through a link 22, which may be the Internet. Because of the size of the video streams, in most situations, it may be preferable to provide the remote receiving computers only a small portion of the video streams at a time.

As mentioned, link 22 may represent the Internet. In such a case, content providing system 12 may include a hosting server to the Internet or link 22 may include a hosting server used by content providing system 12. Alternatively, link 22 may be a direct connection over a telephone line or some other connection. Still alternatively, the entire video signals may be transferred through a disc.

In some embodiments, remote receiving computer 30 includes memory 34, video processing circuitry 36, software 40, a user interface 42, and a display 44 on which to display frames of the video signals. Video processing circuitry 36 may include dedicated hardware (e.g., a graphics card) and a processor. Memory 34 includes general purpose memory as well as memory for encoded MPEG video and decoded video frames. Memory 34 represents a variety of memory including, for example, a hard drive, main memory, video memory (e.g., video static random access memory (VSRAM)), and a compact disc (CD), if used (which are examples of articles including a computer readable medium). User interface 42 may include a keyboard and one or more other user input devices including for example, a mouse, joystick, trackball, keyboard, light pen, touch pad, touch screen, gesture recognition mechanism, etc. Remote receiving computer 32 likewise includes memory 48, video processing circuitry 50, software 52, a user interface 54, and a display 56.

Content providing system 12 and remote receiving computers 30 and 32 may be any one of a variety of computers including, for example, main frame, desktop, portable, and set-top box based computers.

The invention is not restricted to any particular digital format. However, some embodiments of the invention will be described in connection with MPEG (Moving Picture Experts Group) formats. Current and proposed MPEG formats include MPEG-1 ("Coding of Moving Pictures and Associated Audio for Digital Storage Media at up to about 1.5 MBits/s," ISO/IEC JTC 1 CD IS-11172 (1992)), MPEG-2 ("Generic Coding of Moving Pictures and Associated Audio," ISO/IEC JTC 1 CD 13818 (1994); and MPEG-4 ("Very Low Bitrate Audio-Visual Coding" Status: ISO/ IEC JTC 1/SC 29/WG 11, 3/1999). There are different versions of MPEG-1 and MPEG-2. Various formats other than MPEG may be used. The video signals may have interleaved or non-interleaved frames. There may be encoding and decoding of the video signals in addition to the encoding to create the video signal (e.g., discrete cosine transform in MPEG). For example, an MPEG video signal may be encoded for purposes of transmission through link 22.

B. <u>Video Stream Creation</u>

There are various ways in which video signals of the subject may be made. The subject may move, while a camera is stationary. This is particularly useful for objects that may be rotated on a turntable. Alternatively, the subject may remain stationary, while the camera moves. A single camera may be used and moved to different positions to create different video streams. Multiple cameras may be used simultaneously from different positions to create different video streams.

The term "viewpoint" refers to the position and angle of a camera. Other parameters such as zoom may also influence the video signals obtained. When the camera is stationary during creation of the video signals for a video stream, the viewpoint is constant during the video stream (although the zoom or other parameters might change as the video signals are created). When the camera moves, the viewpoint changes in the video stream. At least some view points will be different in the different video streams. Typically, for an effective presentation, the difference in view points is well chosen and controlled. Note that it is not required that a video stream have been created continuously in time.

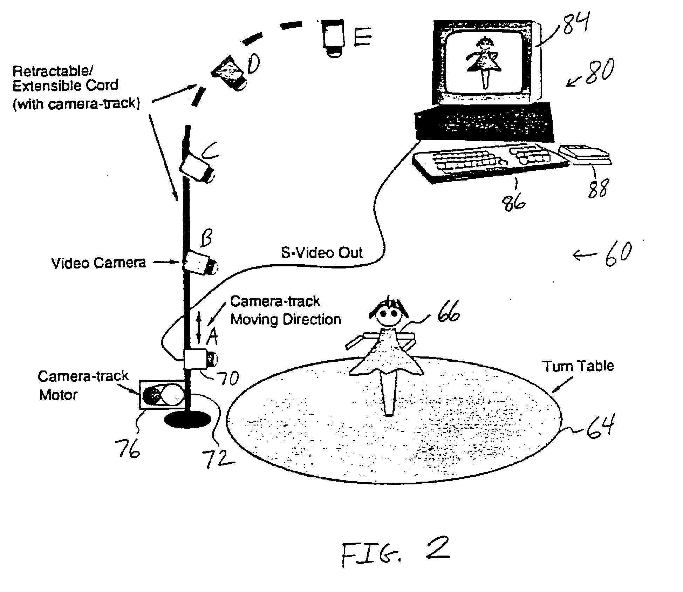

An example of a system in which the subject moves is shown in FIG. 2. Referring to FIG. 2, a system 60 includes a turn table 64 on which an object 66 is positioned. A video camera 70 is secured at a viewpoint A on a camera-track stand 72. As turn table 64 rotates, camera 70 creates video signals for a video stream of object 66. In some embodiments, there is only a single camera 70 that creates the video signals from different viewpoints of object 66 as it rotates. For example, if there is only one camera, it might first make a video stream from viewpoint A, then a video stream from viewpoint B, then a video stream from viewpoint C, etc. (FIG. 2 illustrates viewpoints A ... E, but in practice fewer viewpoints might be used.) In other embodiments, there is one camera for each viewpoint and each camera simultaneously creates video streams from different viewpoints of object 66 as it rotates. An advantage of using multiple cameras is that the frames of the video signals from the different viewpoints are lined up. Also, it may take less time to complete the video signal creation. Motion between viewpoints may be through a camera track motor 76 or manually, or through other means. A mechanism to control the direction of the camera(s) is included.

Turn table 64 may be motorized. A motorized turn table may be useful in keeping a constant relative motion between subject and camera. An advantage of a constant relative motion is it is easier for a remote viewing user to gauge how quickly to advance or backup frames of the video signals. Further, where there is only one camera, using a motorized turn table helps line up frames from different viewpoints and helps create more accurate indexing into the corresponding frame when switching to a different video stream (state transition). However, good results may be obtained through using a typical tripod and/or a manually controlled turntable.

The video is transmitted to a computer, such as a personal computer 80, which includes a display 84, a keyboard 86 and a mouse 88, or other device. The camera may record in a digital format or an analog format that is later converted to a digital video format. The video signals may be provided to computer 80 through, for example, an S-Video Out (serial) connection. No particular standard or format is required. However, it may be useful to put the video signals in a format that is understood by a popular Internet browser such as one of the Internet Explorer™ browsers sold by Microsoft® Corporation or one of the well known Netscape® browsers. The video signals can be retained in the video camera until the completion of creating video signals before downloading to computer 80, or the video may be downloaded before completion.

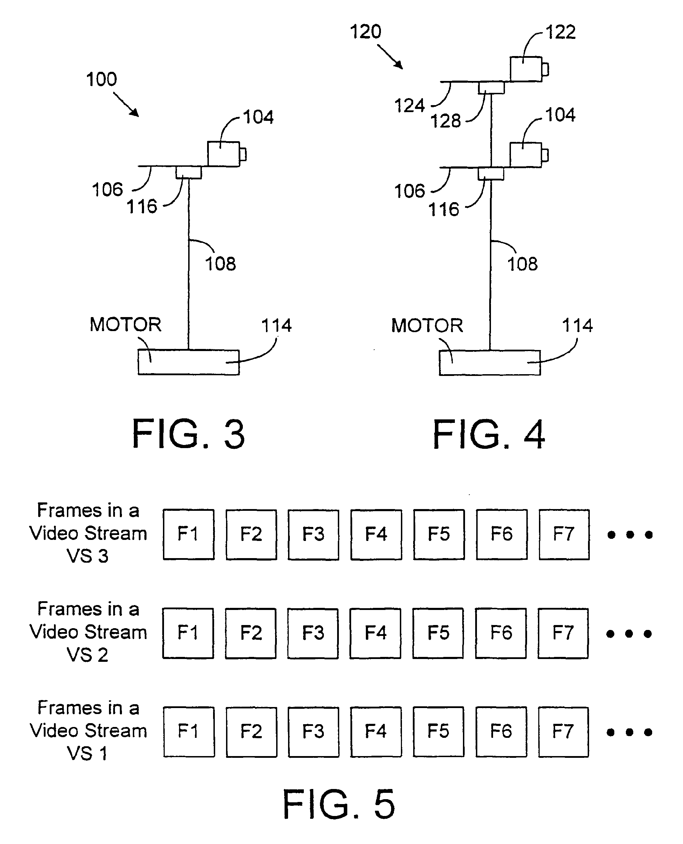

FIG. 3 illustrates a stand 100 including a platform 106 to support a camera 104. Platform 106 rotates on a shaft 108, which may be adjustable in height. An optional motor 114 may controllably rotate platform 106. A mechanism 116 may control the angle of platform 106.

FIG. 4 illustrates a stand 120, which is similar to system 100 except that it supports an additional camera 122 on a platform 124 that tilts through a mechanism 128. The tilt provided by mechanism 128 may be different than that provided through mechanism 116.

As an alternative to the stands in FIGS. 2-4, a hand held video camera may be used or a camera and a simple tripod may be used.

FIG. 5 illustrates frames F1, F2, ... of three different video streams VS 1, VS 2, and VS 3.

Although we can generate as much video content as we want with a digital video camera, there are reasons to be selective. Since processing time scales with the amount of video content, ideally we may use only as much content as necessary for the purposes at hand. This leads to the following question: what kind of viewing sequence conveys the most visual information most effectively? Panoramic view seems a natural choice especially because we are mostly dealing with 3D objects. It should also be noted that our brains are capable of constructing good mental models of objects without complete 3D visual information. Multiple panoramic sequences taken at different elevations appear to contain sufficient visual cues for most people (a single panoramic video sequence is usually not enough due to limited camera angle). Multiple tilt sequences can be included as additional visual cues.

C. <u>User Interaction</u>

Referring to FIG. 1, user interface 42 of remote receiving computer 30 may be used to indicate which portions of the video signal to view. A user may activate displaying of at least the beginning frame of video signals of a reference. In some embodiments, a user can select the beginning reference and in others there is a default reference. Once a frame is shown on display 44, the user can change direction of playing (e.g., from forward to backward) and switch video streams through a user input device (e.g., a mouse) of user interface 42.

In some embodiments, the following convention is used. Frames are displayed in the forward direction in response to a primarily rightward motion (activation) of the mouse and in the backward direction in response to a primarily leftward motion of the mouse. The rate of change of the frames may be related to the speed of the mouse motion and the duration during which frames are changed in response to mouse motion may be related to the distance of motion. When the frames move backward to the beginning or forward to the end of a video stream, they may either stop or wrap around to the end or beginning of the video stream, respectively. For example, if the mouse is moved primarily away from the user (or upwards in the display window), the video stream changes in an upward direction (if there is one) and if the mouse is moved toward the user, the video stream changes in a downward direction (if there is one). By upward, it is meant to a view point at a high elevation and by downward it is meant at a lower elevation. Other conventions could be used.

More particularly, in some embodiments, six types of mouse motions are used: left, right, up, down, zoom in, zoom out. When left mouse button is pressed while the mouse is in the display window, a mouse event is detected. The callback function of the mouse event records the X and Y window coordinates of the mouse position as (Xold, Yold). Denote the new mouse position detected in the next rendering cycle as (Xnew, Ynew). The six mouse motions are classified as the following (assuming Y axis up):

Left: if
$(|X_{new} - X_{old}| - |Y_{new} - Y_{old}|) > \tau$ & $(X_{new} < X_{old})$, $\tau$ is a threshhold value

Right: if
$(|X_{new} - X_{old}|-|Y_{new} - Y_{old}|) > \tau \ \& \ (X_{new} > X_{old})$
Up: if
$(|Y_{new} - Y_{old}|-|X_{new} - X_{old}|) > \tau \ \& \ (Y_{new} > Y_{old})$
Down: if
$(|Y_{new} - Y_{old}|-|X_{new} - X_{old}|) > \tau \ \& \ (Y_{new} < Y_{old})$
Zoom in: if
Shift key is pressed and mouse "up" motion is detected
Zoom out: if
Shift key is pressed and mouse "down" motion is detected.

The invention is not limited to these details.

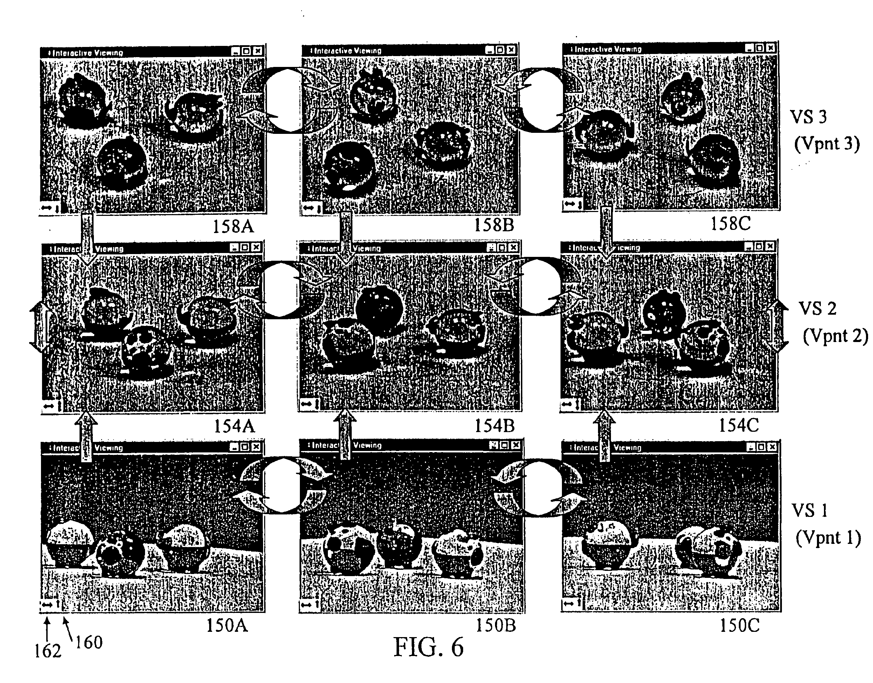

FIG. 6 illustrates representative frames from three different video streams. Frames 150A, 150B, and 150C are in a video stream VS 1 from a viewpoint 1 (Vpnt 1); frames 154A, 154B, and 154C are in a video stream VS 2 from a viewpoint 2 (Vpnt 2), and frames 158A, 158B, and 158C are in a video stream VS 3 from a viewpoint 3 (Vpnt 3). Note that there are frames in the video streams that are not illustrated between the illustrated frames. Merely as an example, viewpoints 1, 2, and 3 might be viewpoint A, B, and C in FIG. 2. The frames of FIG. 6 show three glass objects with reflective light from different rotations, elevations, and angles. The time of creation for the video segments in FIG. 6 was about 5 minutes. This could not be effectively done with IBR. Further, if a reasonably realistic graphics model were created of the glass ornaments, the time and effort required would have been much larger especially considering the complex illumination effects on the ornaments.

Each video stream may be modeled as an individual state in a finite state machine, where frames within a video stream are in the same state. For example, referring to FIG. 6, the frames of video stream VS 1 are in a first state, the frames of video stream VS 2 are in a second state, and the frames of video stream VS 3 are in the third state. Within each state, a user may move in a forward or backward direction at a desired speed through a user input device. In some embodiments, as described below, there may be random access in frame by frame forward or backward direction. The user can also switch to a state as described above. In some embodiments, one can switch between viewpoint VS 1 and VS 2 and between VS 2 and VS 3, but cannot jump between VS 1 and VS 3 without displaying the corresponding frame in VS 2 to avoid large viewing changes. FIG. 6 illustrates significant advantages of this invention over prior art techniques: fast content creation, realism and simple yet effective user interaction. These advantages will facilitate and encourage people to capture and publish sophisticated content quickly and easily on the Internet for others to view and to interact. In some embodiments, only one frame is displayed at a time, while in other embodiments multiple frames may be displayed and a user may be able to jump interactively between them.

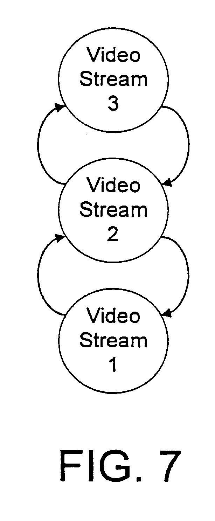

FIG. 7 illustrates the finite state machine nature of the example of FIG. 6. Each circle represents a different state. For example, referring to FIGS. 6 and 7, in some embodiments, a user can switch states from video stream VS 1 to VS 2 and vice versa, and from VS 2 to VS 3 and vice versa. In other embodiments, it is possible to switch states directly from VS 1 to VS 3 and vice versa, without displaying a frame in VS 2. The state machine representation for other examples may be more complex than that of FIG. 7.

The frames of FIG. 6 include navigational aids 160 and 162 in the lower left hand corner of the frame. Only the navigational aids of frame 150A are labeled to avoid clutter. A purpose of the aids are to indicate to a user directions in which there are additional frames to view. In each frame, a user can move to forward or backward, so the horizontal aid 162 points in both to the right and left. (In other examples, a user might reach the first or last frame in a state and the arrow might point only right or left depending on whether there was a wrap around capability.) There are only three states (see FIG. 7), so when the user is viewing a frame in the top state (frames 158A, 158B, and 158C), the only state to change to is downward and vertical aid 160 points downward. When the user is viewing a frame in the bottom state (frames 150A, 150B, and 150C), the only state to change to is upward and vertical aid 160 points up. In the middle state (frames 154A, 154B, and 154C), the state may change up or down, so the vertical aid 160 points up and down.

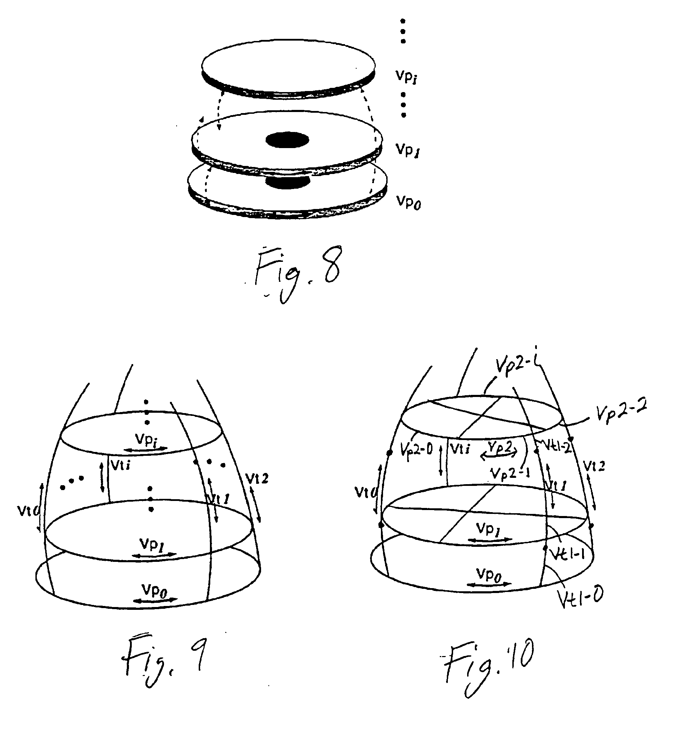

A simple case of the state machines is where the only video streams are of panoramic views, as for example in FIG. 8 where Vp0, Vp1, ... Vpi refer to different panoramic video streams. If the current state is Vpi, then the mouse "up" motion is mapped to a transition to Vpi+j, while the mouse "down" motion is mapped to a transition to Vpi-j, where j is proportional to the speed at which the mouse is dragged. The mouse "left" and "right" motions correspond to playing the current video forward or backward. The number of frames played due to each mouse interaction may be proportional to the speed of mouse motion. The interaction mode with respect to video streams characterized by FIG. 8 are referred to as "Line" mode. A slightly more complicated transition mode involves both panoramic views Vpi and tilt views Vti, as illustrated in FIG. 9. If the current state is Vpi, then a mouse "up" or "down" motion corresponds to transition to the "closest" tilt video stream. For example, in FIG. 10, the panoramic video streams are divided so that different frames are in different sections of the panoramic video streams. For example, frames of panoramic video stream Vp2 are divided into sections Vp2-0 (in proximity to tilt video stream Vt0), Vp2-1 (in proximity to tilt video stream Vt1), Vp2-2 (in proximity to tilt video stream Vt2), and Vp2-i (in proximity to tilt video stream Vti). The tilt video streams are also divided into sections. For example, tilt video stream Vt1 is divided into sections Vt1-0 (in proximity to panoramic video stream VpO), Vt1-1 (in proximity to panoramic video stream Vp1), Vt1-2 (in proximity to panoramic video stream Vp2), etc.

If the current state is Vp2 and the currently displayed frame falls in Vp2-1 then a mouse "down" motion sets the current state to Vt1 (where the user's continued mouse "up" or "down" motion corresponds to smooth playing of Vt1). Similarly, if the current state is Vti, then a mouse "right" or "left" motion corresponds to transition to the "closest" panoramic video stream. The interaction mode of FIG. 9 is referred to as the "Mesh" mode. This mode involves each panoramic (tilt) stream be represented in N (or M) sections where N (M) is the number of panoramic (tilt) video streams. Assuming that the camera was rotating at roughly the same constant speed when the panoramic and tilt videos were generated, it is straightforward to compute which frame to jump to in the new video stream after transition. In the "Line" mode example, if the frame number is "n" of Vpi before transition, then after transition to Vpj, the current frame is set to "m", where

$$m = n*(totalFrameNumberOf\ Vpj\ /\ totalFrameNumberOf\ Vpi\ )$$

In the case of mesh mode, the transition can be made to the nearest intersecting view. For example, if the current state is a tilt state, then the transition may be to the nearest intersecting panoramic state and vice versa.

In some embodiments, zooming may be done by simply scaling the displayed frame via image manipulation. In other embodiments, higher resolution videos (e.g., 640x480) could be captured and a scaled down version (for example 320x240) could be used for normal display and interaction, while the original higher resolution videos only might be decoded at the corresponding frames when zooming is required.

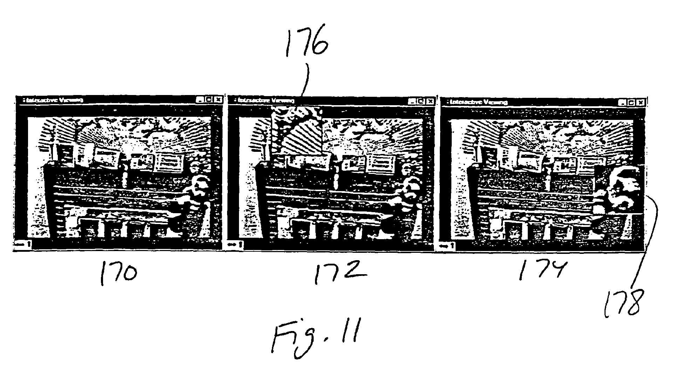

Another zooming effect is achieved by creating a virtual magnifying glass. The virtual magnifying glass is in effect a special square display area of some pre-defined size. The user can place (with the mouse) this magnifying glass anywhere in the display window. Magnification is achieved by replacing the section of the displayed image underneath the magnifying glass by the appropriate portion of a higher resolution version of the same image. Using the virtual magnifying glass, a user can examine in detail the object of interest from a chosen viewing area. FIG. 11 illustrates frames 170, 172, and 174, where a virtual magnifying glass 176 is used in frame 172 and a virtual magnifying glass 178 is used in frame 174. Since only a single frame from the high-resolution video sequence needs to be decoded each time the magnifying glass is initially invoked, this method requires the minimum amount of computation and data transfer. If multiple high-resolution video sequences are available, we can create multiple magnifying glasses with corresponding magnifying degree for the user to choose from.

A common paradigm with using digital video is the "click and play" approach, in which only forward playback is allowed and typically only from the first frame. Some embodiments of the present invention overcome this limitation by employing MPEG processing library technologies for fast random access and frame by frame backward playback through the use of an index table. This index table is created based on the MPEG coding information and frame dependencies. Merely as an example, in some embodiments, with a personal computer (PC) having a Pentium® III Processor at 400 MHz, backward decode speed of MPEG-1 video at 352x240 resolutions is at about 60 frames/sec, which is more than sufficient for displaying video typically captured at 30 frames/sec. For the graphics engine, the Open Graphic Library (OpenGL) developed by Silicon Graphics may be used to couple user-controlled mouse motion to the appropriate playing mode of the appropriate video stream. Advantages of the OpenGL include: (1) hardware acceleration for OpenGL rendering is widely available; (2) OpenGL allows low-level operations of the frame buffer which is valuable for image manipulation; (3) an OpenGL utility library (GLUT) provides functions for detecting mouse events in the display window; and it is straightforward to incorporate 3D graphics model into the video sequences for enhanced realism and interactivity. D3D software of Microsoft Corporation may be used as an alternative to OpenGL.

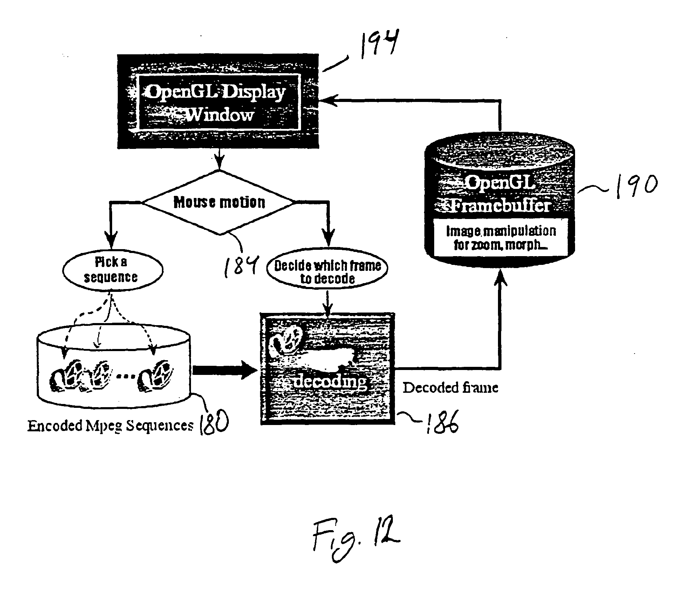

FIG. 12 illustrates a prototype system in block diagram, flowchart form. Referring to FIG. 12, encoded MPEG video sequences are stored in a buffer 180. Content providing system 12 may provide not only the requested frames but also proactively provide frames in close proximity to the requested frames to the requesting remote receiving computer 30 or 32 (see FIG. 1). In some embodiments, only frames in the same video stream are proactively provided. In other embodiments, frames in adjacent video streams are also provided. In response to movement of the mouse (decision box 184), contents of buffer 180 are updated and the appropriate frames are decoded in decoding box 186. The decoding process is described in greater detail blow. The decoded frames are provided to an OpenGL Framebuffer block 190, where the frames may be manipulated for zoom. The frames may also be manipulated by morphing or other techniques. The decoded frames are provided to an OpenGL Display Window 194 (e.g., display 42 in FIG. 1).

Various known software tools other than OpenGL may be used. For example, D3D software of Microsoft Corporation may be used as an alternative to OpenGL. Fast Random Access of Frames and Backward Frame-by-Frame Playback MPEG-1 and MPEG-2 video are made up of three basic frame types: I frames, P frames and B frames.

I frames are coded independently of other frames. P frames are coded based on the previous I or P frames. B frames are also known as Bi-directional frames and are coded based on the previous and/or next I or P frames. For MPEG-2 video coded using field coding, B frames may also depend on a different field coded as a B frame. The cost of decompression varies across the different frame types. I frames are cheapest to decode, followed by P frames and then by B frames. To decode P and B frames, motion compensation is required. A B frame is typically more expensive to decode than a P frame because it may depend on two frames whereas a P frame only depends on one frame.

For convenience, the following examples will be described with a 9 frame group of pictures (GOP) (which has 10 frames if the I frame of the next GOP is included). However, the invention is not limited to a particular number of frames in the GOP. For example, a GOP could typically have 15 or 30 frames, or other some other number of frames.

The invention is not restricted to use with frames with any particular resolution or number of bytes. For example, for MPEG1 video (352x240 resolution), the size of one decompressed frame may be 1/4 Megabyte (Mbyte) in RGB mode and 1/8 MByte in YUV mode. With greater resolutions, the size can be much greater.

Consider the following pattern of the GOP is the order of displaying frames: I1 (F1), B1 (F2), B2 (F3), P1 (F4), B3 (F5), B4 (F6), P2 (F7), B5 (F8), B6 (F9), I2 (F10). The frame numbers are in parenthesis and the numbers after the frame types are used to distinguish among the different frames with the same encoding type. In contrast to the display order, the encode and decode orders are I1 P1 B1 B2 P2 B3 B4 I2 B 1 B2.

1. Random Access

Random access into arbitrary frames of an MPEG video is not straightforward because of frame dependencies. For instance, to access P1, I1 needs to be first decoded; to access B4, which depends on P1 and P2, we will need to first decode I1, P1 and P2.

One approach would be to decode every frame in the GOP so that the needed decoded frames would be available. However, that brute force approach is wasteful. A better approach for random access is to maintain a list of immediate frame dependencies for each frame. The immediate frame dependencies specify the set of frames directly needed for decode operation of the current frame. For the above example, the following are immediate frame dependencies:

I1: none
B1:I1, P1
B2:I1, P1
P1:I1
B3:P1, P2
B4:P1, P2
P2: P1
B5:P2, I2
B6:P2, I2
12: none

(The frame dependencies could be provided by a look-up table, which could be accessed by indices or frame numbers.)

Thus, decoding B5, involves using the decoded P2 and I2 needed for motion compensation. In addition, decoding P2 involves using the decoded P1, which in return requires the decoded I1. Decoding B5 involves using decoded I1, I2, P1 and P2. Decoding B2 involves using the decoded I1 and P1 for motion compensation; decoding P1 in turns requires decoded I1. B2 therefore requires the decoded I1 and P1. Accordingly, the needed decoded frames are decoded first and stored in memory. Note that in some cases decoded frames will be stored even if they are not going to be displayed themselves, so they will be available in decoding other frames.

2. Frame-by-frame Backward Playback

Backward (reverse) playback of MPEG video can be straightforwardly implemented using random access techniques. Thus, to access the above 10 frames backward, we could use the random access method above to decode frame 10, then use the random access method to decode frame 9 without taking advantage of the fact that it was already used for decoding frame 10, and so on. This approach, however, does not exploit the temporal coherence of backward decoding. The following is a novel technique to exploit the coherence.

The decoded frames are stored in a decoded frame cache. Various types of memory may be used for the decoded frame cache. Main memory dynamic random access memory (DRAM) is an example. Video random access memory (VRAM) may also be used. A separate memory or section of memory could be dedicated solely to holding the decoded frames. The decoded frame cache does not have to be all in contiguous locations.

The decoded frames cache may be a fixed or variable size. If it is of fixed size it should be large enough to hold the minimum number of decoded frames needed considering the GOPs that may be encountered. The size could dynamically change if the number of frames in the GOP changes. Under one approach, the decoded frames cache is of a fixed size and when the cache is full, a Least Recently Used (LRU) replacement policy is used to replace the frame that has been least recently accessed. If the cache is not of a fixed size, it could hold a fixed number of frames and a LRU replacement policy could be used.

Using the previous example for a backward decode from frame 10 to 1, the following will happen using the new algorithm on frames 10 to 7:

Frame 10 is the I2 frame. I2 is decoded and stored in the decoded frames cache. Cache = [I2].

Frame 9 is the B6 frame. B6 needs I2, P2, P1 I1. P2, P1, and I1 are decoded. B6 is also decoded. I2 is already in the cache so it does not need to be re-decoded. Decoded P2, P1, I1 and B6 are stored in the cache. Cache = [I2, I1, P1, P2, B6].

Frame 8 is the B5 frame. B5 needs I2 and P2, which are already in the cache. Decode B5 and put in the cache. Cache = [I2, I1, P1, P2, B6, B5]

Frame 7 is the P2 frame. P2 needs P1 which is already decoded. Decode P2 and put in cache. Cache = [I2, I1, P1, P2, B6, B5].

Random access can also be more effectively performed using the above described frame caching technique used in backward playback. The key is to use the same caching mechanism for storing recently decoded frames and to re-use these frames if they are requested in the near future. For instance, the following set of frames may be requested to be decoded: I1, B3, B5. To decode B3, both P1 and P2 are needed. As a result, P1, P2 and I1 will be decoded and placed in the decoded frame cache and used from the decoded frame cache if they were already there. In the next request to decode B5, which depends on P2 and I2, only I2 needs to be decoded since P2 is already in the cache.

The caching technique can be performed through hardware or software control. The technique is described in terms of software pseudo code, but can be implemented in hardware or through software according to different pseudo code. That is, there are a variety of ways to implement the cache technique.

Consider the example I1 (F1), B1 (F2), B2 (F3), P1(F4), B3(F5), B4(F6), P2(F7), B5(F8), B6(F9), I2 (F10), mentioned above.

Assume there are the following two functions (1) DecodeCurrentFrame (N, ReferenceSet) and (2) GetDependencyFrameIndex (N).

In DecodeCurrentFrame (N, ReferenceSet), frame N is decoded according to an MPEG algorithm using frame N and the ReferenceSet. The ReferenceSet is the set of referenced frames needed to decode frame N. For example, ReferenceSet for P1 is {frame 1}, ReferenceSet for B4 is {frame 4, frame 7}. A decoded frame N is returned by the function. The decoded frame may be in RGB, YUV, or another format. RGB is used in the example.

In GetDependencyFrameIndex (N), a list of the reference frames that are needed to decode current frame N is obtained. A list of frame index or indices is returned. For example, e.g., GetDependencyFrameIndex (5) = {7, 10}.

In the following pseudo code there is a distinction between the index and the actual frame. For example, 10 is an index and frame 10 is the actual frame. There is an array of a data structure called MPEGFrameCache, which is the decoded frame cache. MPEGFrameCache has two attributes: LastTimeUsed (for using in the LRU technique) and FrameRGB.

The following is pseudo-code (lines 1 - 22) to implement GetFrame() using the caching technique according to some embodiments:

```
frame GetFrame(N)
        SetofDependencyIndex = GetDependencyFrameIndex (N)
        SetofDependencyFrame = {}
        /* decode frame in the dependency list if needed */
        /* decoding also forces the frame to go to the decoded frames cache */
        for each FrameIndex in SetofDependencyIndex do
                if frame FrameIndex NOT in MPEGFrameCache then
                        /* this call is recursive */
Insert GetFrame (Frame) to SetofDependencyFrame
                else
                        Retrieve frame indicated by FrameIndex from
MPEGFrameCache
                        Insert frame indicated by FrameIndex to
SetofDependencyFrame
                        Update LastTimeUsed of frame indicated by FrameIndex
```

```
in
MPEGFrameCache
14                end if
15             end for
16          currentFrame = DecodeCurrentFrame (N, SetofDependencyFrame)
17          if MPEGFrameCache is full then
18          Remove element from MPEGFrameCache with oldest LastTimeUsed
19          endif
20          Insert currentFrame to MPEGFrameCache
21          return currentFrame
22          end
```

With respect to the example given above, the following sequence of events happens to decode backward from frame 10. Assume that MPEGFrameCache is initially empty.

```
+ GetFrame (10)
        GetDependencyFrameIndex (10) = {}
        DecodeCurrentFrame (10, {})
        MPEGFrameCache = {frame 10}

+ GetFrame (9)
        GetDependencyFrameIndex (9) = {7, 10}
        Since frame 7 is not in MPEGFrameCache, call GetFrame (7)
        + GetFrame (7)
                GetDependencyFrameIndex(7) = {4}
                Since frame 4 is not in MPEGFrameCache, call GetFrame (4)
                + GetFrame (4)
                        GetDependencyFrameIndex (4) = {1}
                        Since frame 1 is not in MPEGFrameCache, call GetFrame (1)
                        + GetFrame (1)
                                GetDependencyFrameIndex (1) = {}
                                DecodeCurrentFrame (1, {})
                                MPEGFrameCache = {frame 1, frame 10}
                        DecodeCurrentFrame (4, {1})
                        MPEGFrameCache = {frame 1, frame 10, frame 4}
                DecodeCurrentFrame (7, {4})
                MPEGFrameCache = {frame 1, frame 10, frame 4, frame 7}

        Frame 10 is already in MPEGFrameCache
        DecodeCurrentFrame (9, {7, 10})
        MPEGFrameCache = {frame 1, frame 10, frame 4, flame 7, frame 9}

+ GetFrame (8)
        GetDependencyFrameIndex (8) = {7, 10}
        Both Frame 7 and 10 are in the MPEGFrameCache
        DecodeCurrentFrame (8, {7, 10})
        MPEGFrameCache = {frame 1, frame 10, frame 4, frame 7, frame 9, frame 8}
...
```

In the above trace, the LastTimeUsed attribute of MPEGFrameCache is not indicated. However, the LRU technique could be used. Note that the invention is not limited to an LRU technique.

The frames in MPEGFrameCache are not necessarily ordered. Rather than use a recursive call, the above listed pseudo code (lines 1 - 20) could be modified to include a loop wherein the terminating condition is that all frames on which frame N is dependent have been decoded and are available for use in decoding frame N.

Additional Information And Embodiments

It is important to compactly represent the video captured for efficient transmission and storage. Furthermore, it typically may be much more efficient during the presentation time if most of the data is stored in the memory of the computer doing the decoding. This would minimize excessive file reading. In some embodiments, the invention uses MPEG compression techniques for compressing the digital video captured. MPEG compression provides excellent compression ratios for given visual quality. It is based on two basic modes of compression: intra-frame coding using block-based DCT and inter-frame coding exploiting similarities of content across frames close together in time. While the use of inter-frame coding in MPEG significantly reduces the bit rate, such dependencies make random access difficult.

Reference in the specification to "some embodiments" or "other embodiments" means that a particular feature, structure, or characteristic described in connection with the embodiments is included in at least some embodiments, but not necessarily all embodiments, of the invention. The various appearances of the term "some embodiments" in the description are not necessarily all referring to the same embodiments.

The term "responsive" and related terms mean that one signal or event is influenced to some extent by another signal or event, but not necessarily completely or directly. If the specification states a component, event, or characteristic "may", "might" or "could" be included, that particular component, event, or characteristic is not required to be included.

Those skilled in the art having the benefit of this disclosure will appreciate that many other variations from the foregoing description and drawings may be made within the scope of the present invention. Accordingly, it is the following claims that define the scope of the invention.

**Claims**

1. A method of interactive video viewing of a subject, comprising:

   storing video streams (VS1 to VS3) of the subject (66) taken from different viewpoints (A to E), wherein the subject is in rotary motion relative to the viewpoints and each of the video streams (VS1 to VS3) correspond to a different one of the viewpoints (A to E), each of the video streams (VS1 to VS3) including frames (F1 to F7), corresponding to different angular views of the subject from the respective viewpoint, the different angular views corresponding to different relative angles of rotation of the viewpoint and the subject;

   receiving instructions to provide an interactive transition of views including an instruction specifying a direction from a first angular view of the subject from a first viewpoint to following or succeeding angular views of the subject from the first viewpoint or another of the viewpoints, and an instruction concerning the speed of this transition; and

   providing corresponding frames from one or more of the video streams (VS1 to VS3) in accordance with the above instructions for direction of transition and speed of transition.

2. The method of claim 1, wherein the frames (F 1 to F7) are provided to a remote computer (30) through the Internet (22).

3. The method of claim 1, wherein the video streams (VS1 to VS3) are provided in a Moving Picture Experts Group (MPEG) format.

4. The method of claim 1, further comprising providing navigational aids (162) associated with the provided frames (F1 to F7) indicating whether an additional frame is to be provided in a forward or backward direction.

5. The method of claim 1, further comprising providing navigational aids (160) associated with the provided frames (F1 to F7) indicating whether an additional frame is to be provided from a different viewpoint.

6. The method of claim 1, wherein the video streams (VS1 to VS3) are created through capturing video signals with at least one camera (70) as the subject (66) rotates while the at least one camera (70) remains stationary, and when viewed by a viewer, the frames give the viewer the impression of the subject (66) rotating a stationary camera (70).

7. The method of claim 1, wherein the video streams (VS1 to VS3) are created through capturing video signals with at least one camera (70) as the at least one camera (70) moves while the subject remains (66) stationary and when viewed by a viewer, the provided frames give the viewer the impression of the at least one camera (70) moving with respect to a stationary subject (66).

8. The method of claim 1, wherein the viewpoint changes.

9. The method of claim 1, wherein the viewpoint remains constant.

10. A method as claimed in claim 1 wherein the video streams (VS1 to VS3) include panoramic views.

11. A method as claimed in claim 10 wherein the video streams include panoramic video streams (Vp0, Vp1,...Vpi) and tilt video streams (Vt0, Vt1, ...Vti) and in a mesh mode a transition can be made to a next intersecting view so that if a tilt stream is being viewed a transition can be made to a nearest intersecting panoramic stream and if a panoramic stream is being viewed a transition can be made to a nearest tilt stream.

12. A method as claimed in any of the preceding claims, wherein a symbol signifying a magnifying glass be placed over a portion of a displayed image causes a transition to a higher resolution video stream of the portion of the displayed image in greater magnification than remaining portions of the image.

13. A method as claimed in any of the preceding claims for MPEG encoded video streams, wherein in order to decode B or P frames the frames on which the B or P frames are dependent are first decoded and stored in a cache memory to provide random or reverse motion display of B or P frames.

14. A system comprising means to implement a method as claimed in any preceding claim.

15. A computer program product comprising code for implementing all the steps of a method as claimed in any of claims 1 to 13 when that computer program product is run on a computer.

16. Machine-readable storage storing a computer program product as claimed in claim 15.

**Patentansprüche**

1. Verfahren zur interaktiven Videoanzeige eines Motivs, wobei das Verfahren folgendes umfasst:

das Speichern von Videoströmen (VS1 bis VS3) des Motivs (66) aus verschiedenen Perspektiven (A bis E), wobei sich das Motiv in einer Drehbewegung im Verhältnis zu den Perspektiven befindet, und wobei jeder der Videoströme (VS1 bis VS3) einer anderen der Perspektiven (A bis E) entspricht, wobei jeder der Videoströme (VS1 bis VS3) Frames (F1 bis F7) aufweist, die Ansichten aus verschiedenen Winkeln des Motivs aus der entsprechenden Perspektive entsprechen, wobei die Ansichten aus verschiedenen Winkeln unterschiedlichen relativen Rotationswinkeln der Perspektive und des Motivs entsprechen;
das Empfangen von Befehlen zum Bereitstellen eines interaktiven Übergangs zwischen den Ansichten, mit einem Befehl, der eine Richtung von einer Ansicht eines ersten Winkels des Motivs aus einer ersten Perspektive zu folgenden oder nachgeschalteten Winkelansichten spezifiziert, und mit einem Befehl, der die Geschwindigkeit dieses Übergangs betrifft; und
das Bereitstellen entsprechender Frames von einem Videostrom oder mehreren Videoströmen (VS 1 bis VS3) gemäß den vorstehenden Befehlen für die Richtung des Übergangs und die Geschwindigkeit des Übergangs.

2. Verfahren nach Anspruch 1, wobei die Frames (F1 bis F7) über das Internet (22) an einen entfernten Computer (30) bereitgestellt werden.

3. Verfahren nach Anspruch 1, wobei die Videoströme (VS 1 bis VS3) in einem Movie Picture Experts Group (MPEG) Format bereitgestellt werden.

4. Verfahren nach Anspruch 1, wobei dieses ferner das Bereitstellen von Navigationshilfen (162) umfasst, die den bereitgestellten Frames (F1 bis F7) zugeordnet sind, wobei sie anzeigen, ob ein zusätzlicher Frame in eine Vorwärts- oder Rückwärtsrichtung bereitgestellt werden soll.

5. Verfahren nach Anspruch 1, wobei dieses ferner Navigationshilfen (160) umfasst, die den bereitgestellten Frames (F1 bis F7) zugeordnet sind, wobei sie anzeigen, ob ein zusätzlicher Frame von einer anderen Perspektive bereitgestellt werden soll.

6. Verfahren nach Anspruch 1, wobei die Videoströme (VS1 bis VS3) durch das Erfassen von Videosignalen mit mindestens einer Kamera (70) erzeugt werden, während sich das Motiv (66) dreht, während mindestens eine Kamera (70) ortsfest bleibt, und wobei beim Betrachten durch einen Betrachter die Frames dem Betrachter den Eindruck vermitteln, als würde das Motiv (66) eine stationäre Kamera (70) drehen.

7. Verfahren nach Anspruch 1, wobei die Videoströme (VS 1 bis VS3) durch das Erfassen von Videosignalen mit mindestens einer Kamera (70) erzeugt werden, während sich die mindestens eine Kamera (70) bewegt, während das Motiv (66) ortsfest bleibt, und wobei beim Betrachten durch einen Betrachter die bereitgestellten Frames dem Betrachter den Eindruck vermitteln, dass sich die mindestens eine Kamera (70) im Verhältnis zu einem ortsfesten Motiv (66) bewegt.

8. Verfahren nach Anspruch 1, wobei sich die Perspektive ändert.

9. Verfahren nach Anspruch 1, wobei die Perspektive konstant bleibt.

10. Verfahren nach Anspruch 1, wobei die Videoströme (VS 1 bis VS3) Panoramaansichten aufweisen.

11. Verfahren nach Anspruch 10, wobei die Videoströme Panorama-Videoströme (Vp1, Vp1, ..,Vpi) und Schwenk-Videoströme (Vt0, Vtl, ...Vti) aufweisen, und wobei in einem Mischmodus ein Übergang zu einer nächsten Schnittansicht hergestellt werden kann, so dass beim Anzeigen eines Schwenkstroms ein Übergang zu dem nächsten schneidenden P'noramastrom vorgenommen werden kann, und so dass beim Anzeigen eines Panoramastroms ein Übergang zu einem nächsten Schwenkstrom vorgenommen werden kann.

12. Verfahren nach einem der vorstehenden Ansprüche, wobei ein Symbol, das eine Lupe kennzeichnet, über einem Abschnitt eines angezeigten Bilds platziert werden kann, und wobei dies einen Übergang zu einem Videostrom höherer Auflösung des Abschnitts des angezeigten Bilds in stärkerer Vergrößerung als die restlichen Abschnitte des Bilds bewirkt.

13. Verfahren nach einem der vorstehenden Ansprüche für MPEG-codierte Videoströme, wobei zum Decodieren von B- oder P-Frames die Frames, von denen die B- oder P-Frames abhängig sind, zuerst decodiert und in einem Cache-Speicher gespeichert werden, um eine wahlfreie oder umgekehrte Bewegtbildanzeige der B- oder P-Frames bereitzustellen.

14. System, das eine Einrichtung zum Implementieren eines Verfahrens gemäß den vorstehenden Ansprüchen umfasst.

15. Computerprogrammprodukt, das einen Code zum Implementieren aller Schritte eines Verfahrens gemäß den Ansprüchen 1 bis 13 umfasst, wenn das Computerprogrammprodukt auf einem Computer ausgeführt wird.

16. Maschinenlesbarer Speicher zum Speichern eines Computerprogrammprodukts nach Anspruch 15.

**Revendications**

1. Procédé de visionnage vidéo interactif d'un sujet, comprenant les étapes consistant à :

stocker des flux vidéo (VS1 à VS3) du sujet (66) pris de différents points de vue (A à E), dans lequel le sujet est en mouvement rotatif par rapport aux points de vue et chacun des flux vidéo (VS 1 à VS3) correspond à un point de vue différent (A à E), chacun des flux vidéo (VS1 à VS3) comprenant des trames (F1 à F7) correspondant à différentes vues angulaires du sujet du point de vue respectif, les différentes vues angulaires correspondant aux différents angles relatifs de rotation du point de vue et du sujet ;
recevoir des instructions pour fournir une transition interactive de vues incluant une instruction spécifiant une direction depuis une première vue angulaire du sujet depuis un premier point de vue vers des vues angulaires suivantes ou successives du sujet depuis le premier point de vue ou un autre des points de vue, et une instruction concernant la vitesse de cette transition ; et
fournir les trames correspondantes depuis un ou plusieurs des flux vidéo (VS 1 à VS3) conformément aux instructions ci-dessus pour la direction de la transition et la vitesse de la transition.

2. Procédé selon la revendication 1, dans lequel les trames (F1 à F7) sont fournies à un ordinateur distant (30) via Internet (22).

3. Procédé selon la revendication 1, dans lequel les flux vidéo (VS 1 à VS3) sont fournis dans un format Moving Picture Experts Group (MPEG).

4. Procédé selon la revendication 1, comprenant en outre l'étape consistant à fournir des aides à la navigation (162) associées aux trames fournies (F1 à F7) indiquant si une trame supplémentaire doit être fournie dans une direction avant ou arrière.

5. Procédé selon la revendication 1, comprenant en outre l'étape consistant à fournir des aides à la navigation (160) associées aux trames fournies (F1 à F7) indiquant si une trame supplémentaire doit être fournie depuis un point de vue différent.

6. Procédé selon la revendication 1, dans lequel les flux vidéo (VS1 à VS3) sont créés en capturant des signaux vidéo avec au moins une caméra (70) alors que le sujet (66) tourne tandis que l'au moins une caméra (70) reste fixe, et lorsqu'elles sont vues par un téléspectateur, les trames donnent au téléspectateur l'impression que le sujet (66) tourne une caméra (70) fixe.

7. Procédé selon la revendication 1, dans lequel les flux vidéo (VS1 à VS3) sont créés en capturant des signaux vidéo avec au moins une caméra (70) alors que l'au moins une caméra (70) se déplace tandis que le sujet (66) reste fixe et lorsqu'elles sont vues par un téléspectateur, les trames fournies donnent au téléspectateur l'impression que l'au moins une caméra (70) se déplace par rapport à un sujet (66) fixe.

8. Procédé selon la revendication 1, dans lequel le point de vue change.

9. Procédé selon la revendication 1, dans lequel le point de vue reste constant.

10. Procédé selon la revendication 1, dans lequel les flux vidéo (VS1 à VS3) incluent des vues panoramiques.

11. Procédé selon la revendication 10, dans lequel les flux vidéo incluent des flux vidéo panoramiques (Vp0, Vp1,... Vpi) et des flux vidéo verticaux (Vt0, Vt1,... Vti) et dans un mode de maille une transition peut être faite vers une vue d'intersection suivante de sorte que si un flux vertical est vu, une transition peut être faite vers un flux panoramique d'intersection le plus proche et si un flux panoramique est vu, une transition peut être faite vers un flux vertical le plus proche.

12. Procédé selon l'une quelconque des revendications précédentes, dans lequel un symbole signifiant une lentille grossissante placé sur une partie d'une image affichée amène une transition vers un flux vidéo à résolution supérieure de la partie de l'image affichée avec plus de grossissement que les parties restantes de l'image.

13. Procédé selon l'une quelconque des revendications précédentes pour des flux vidéo codés MPEG, dans lequel afin de décoder des trames B ou P, les trames dont les trames B et P dépendent sont tout d'abord décodées et stockées dans une mémoire cache pour fournir un affichage de mouvement aléatoire ou inverse des trames B ou P.

14. Système comprenant des moyens pour mettre en oeuvre un procédé selon l'une quelconque des revendications précédentes.

15. Produit de programme informatique comprenant un code pour mettre en oeuvre toutes les étapes d'un procédé selon l'une quelconque des revendications 1 à 13 lorsque ce produit de programme informatique est exécuté sur un ordinateur.

16. Stockage lisible par machine stockant un produit de programme informatique selon la revendication 15.

CONTENT
PROVIDING
SYSTEM
(e.g., Personal
Computer)

VIDEO
SIGNALS — 14

VIDEO
PROCESSING
CIRCUITRY — 18

SOFTWARE — 20

12

LINK
(e.g, Internet) — 22

REMOTE
RECEIVING
COMPUTER

30

MEMORY

SOFTWARE — 34

40

VIDEO
PROCESSING
CIRCUITRY — 36

USER
INTERFACE — 42

DISPLAY — 44

REMOTE
RECEIVING
COMPUTER

MEMORY

SOFTWARE — 48

52

32

VIDEO
PROCESSING
CIRCUITRY — 50

USER
INTERFACE — 54

DISPLAY — 56

FIG. 1

Retractable/
Extensible Cord
(with camera-track)

Video Camera ──►

S-Video Out

Camera-track
Moving Direction

Camera-track
Motor

Turn Table

FIG. 2

FIG. 3  FIG. 4

Frames in a
Video Stream
VS 3

| F1 | F2 | F3 | F4 | F5 | F6 | F7 | • • • |

Frames in a
Video Stream
VS 2

| F1 | F2 | F3 | F4 | F5 | F6 | F7 | • • • |

Frames in a
Video Stream
VS 1

| F1 | F2 | F3 | F4 | F5 | F6 | F7 | • • • |

FIG. 5

FIG. 6

VS 3
(Vpnt 3)

VS 2
(Vpnt 2)

VS 1
(Vpnt 1)

158A    158B    158C

154A    154B    154C

150A    150B    150C

162   160

EP 1 190 575 B1

# FIG. 7

Fig. 8

Fig. 9

Fig. 10

Fig. 11

*194*

OpenGL Display Window

Mouse motion

*184*

Pick a sequence

Decide which frame to decode

OpenGL Framebuffer

*190*

Image manipulation for zoom, morph...

decoding

Decoded frame

*186*

Encoded Mpeg Sequences *180*

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5732185 A

**Non-patent literature cited in the description**

• **Shenchang Eric Chen.** QuickTime VR - An image-based approach to virtual environment navigation. *Computer graphics proceedings,* 06 August 1995, 29-38